# FASCICULE DE BREVET EUROPEEN

(11) **EP 2 352 922 B1**
(45) Date de publication et mention de la délivrance du brevet: **28.06.2017**
(21) Numéro de dépôt: 09756031.2
(22) Date de dépôt: 15.10.2009
(51) Int. Cl.: F04D 27/02, F04D 29/44, F04D 29/54, F04D 29/68

(54) **DIFFUSEUR MUNI D'AUBES A ORIFICES**
SCHAUFELN MIT ÖFFNUNGEN AUFWEISENDER DIFFUSER
DIFFUSER HAVING BLADES WITH APERTURES

(30) Priorité: 17.10.2008 FR 0857053
(43) Date de publication de la demande: 10.08.2011
(73) Titulaire: Safran Helicopter Engines, 64510 Bordes (FR)
(72) Inventeur: PORODO, Jérôme, F-64000 Pau (FR); TARNOWSKI, Laurent, F-64000 Pau (FR); VIGNAU, Hubert, F-64800 Nay (FR)
(74) Mandataire: Balesta, Pierre
(86) Numéro de dépôt international: PCT/FR2009/051966
(87) Numéro de publication internationale: WO 2010/043820

(56) Documents cités:
- GB-A- 2 041 149
- JP-A- 54 127 014
- JP-A- 58 059 399
- US-B1- 6 210 104

## Description

La présente invention à trait aux étages de compression de turbines à gaz et plus particulièrement aux diffuseurs que l'on trouve habituellement dans de tels étages de compression, par exemple dans les compresseurs du type centrifuge ou mixte.

Le rôle du diffuseur est de redresser l'écoulement issu du rouet du compresseur afin de récupérer la pression dynamique du fluide sous forme de pression statique.

Pour ce faire, le diffuseur comporte en général une pluralité d'aubes disposées selon une circonférence et enserrées entre deux anneaux de maintien.

Cette déviation imposée par les aubes du diffuseur peut provoquer un décollement du fluide sur l'intrados ou sur l'extrados des aubes, lequel décollement, dès lors qu'il est important, peut conduire au décrochage du fluide et, par suite, au pompage.

Il est connu que le phénomène de pompage est tout à fait néfaste pour les éléments constitutifs du compresseur, en sorte que l'on cherche à l'éviter dans la mesure du possible.

La présente invention, qui vise à pallier cet inconvénient, concerne donc plus particulièrement un diffuseur pour un compresseur mixte ou centrifuge d'une turbine à gaz, comportant au moins une aube présentant un intrados, un extrados et un premier flanc, ladite aube étant pourvue d'une pluralité d'orifices débouchant sur l'extrados et/ou l'intrados et communiquant avec au moins une cavité ménagée dans l'aube, ladite cavité s'étendant transversalement par rapport à l'aube tout en débouchant sur le premier flanc. Ici, la direction transversale est celle s'étendant entre le premier flanc et le second flanc de l'aube opposé au premier flanc.

L'idée ici est d'aspirer légèrement le fluide circulant sur l'extrados et/ou l'intrados afin de l'empêcher de décoller de l'aube.

La structure d'un tel diffuseur est déjà connue par US 6 210 104 qui en donne une illustration bien que le but recherché soit différent.

En effet, ce document propose d'aspirer une partie du fluide par le biais de trous réalisés sur les extrados des aubes pour l'utiliser ensuite comme un fluide de refroidissement afin de refroidir les pièces chaudes de la turbine.

Un inconvénient de ce dispositif est que l'aspiration du fluide opérée par les trous n'est pas homogène sur l'extrados en conséquence de quoi le fluide peut encore décoller.

Un but de la présente invention est de proposer un diffuseur pour un compresseur centrifuge ou mixte permettant une aspiration homogène du fluide.

L'invention atteint son but par le fait que la section transversale de la cavité varie dans la direction transversale de l'aube selon une loi de variation croissante vers le premier flanc.

Autrement dit, la section transversale de la cavité à l'endroit du premier flanc sur lequel elle débouche est supérieure à la section transversale au fond de la cavité, étant entendu que le fond de la cavité est transversalement opposé au premier flanc.

Cette augmentation de la section transversale de la cavité, considérée depuis le fond de la cavité, est choisie de façon que les orifices communiquant avec ladite cavité présentent le même débit d'aspiration, et, par ailleurs, qu'un même orifice présente un débit d'aspiration uniforme sur toute sa section.

Pour ce faire, de manière préférentielle, la section transversale de la cavité, considérée selon la direction transversale de l'aube, augmente proportionnellement à l'accroissement de la section globale d'aspiration. Cette section globale d'aspiration est égale à la somme des sections des orifices si les orifices sont des trous et/ou à une intégrale si l'orifice d'aspiration, telle une fente transversale, présente une surface d'aspiration continue.

Selon l'invention, les orifices peuvent donc se trouver sur l'extrados uniquement, sur l'intrados uniquement ou bien à la fois sur l'extrados et l'intrados.

De manière avantageuse, le diffuseur selon l'invention comporte une première série d'orifices débouchant sur l'extrados et communiquant avec au moins une cavité ménagée dans l'aube et débouchant sur le premier flanc.

Selon une première variante, le diffuseur comprend une unique cavité débouchant sur le premier flanc. L'ensemble des trous de la première série communique alors avec cette unique cavité ménagée dans une épaisseur de l'aube.

Selon une seconde variante, le diffuseur comprend une pluralité de cavités formant des alvéoles débouchant sur le premier flanc.

De préférence, ces alvéoles sont identiques et, encore de préférence, présentent une forme tronconique. La section transversale de ces alvéoles est donc un disque dont le rayon croît vers le premier flanc.

De manière avantageuse, le diffuseur comporte en outre une deuxième série d'orifices débouchant sur l'intrados et communiquant avec au moins une autre cavité ménagée dans l'aube et débouchant sur l'un des deux flancs de l'aube.

De préférence, ladite au moins une autre cavité débouche également sur le premier flanc.

Avantageusement, cette autre cavité présente une section transversale présentant une loi de variation croissante vers le premier flanc.

Grâce à quoi, l'aspiration du fluide est homogène tant sur l'extrados de l'aube que sur son intrados.

Selon une variante, le diffuseur comprend une unique cavité débouchant sur le premier flanc.

Selon une autre variante, le diffuseur comprend une pluralité de cavités formant des alvéoles débouchant sur le premier flanc. Dans ce cas, chaque cavité présente préférentiellement une forme tronconique.

Par ailleurs, les orifices sont de préférence des perçages et/ou des fentes transversales.

Conformément à l'invention, plusieurs modes de réalisation sont envisageables : on peut associer des perçages et des fentes, prévoir de faire communiquer plusieurs perçages avec une même alvéole ou bien une seule fente avec une alvéole, ou bien faire communiquer tous les orifices avec une cavité unique ménagée dans l'aube.

De préférence mais non exclusivement, le diffuseur est un diffuseur radial.

L'invention concerne enfin une turbomachine comportant un diffuseur conforme à la présente invention.

L'invention sera mieux comprise et ses avantages apparaîtront mieux à la lecture de la description qui suit, de deux modes de réalisation indiqués à titre d'exemples non limitatifs. La description se réfère aux dessins annexés sur lesquels :
- la figure **1** est une vue en coupe partielle d'une turbine à gaz d'hélicoptère comportant un compresseur centrifuge équipé d'un diffuseur selon l'invention ;
- la figure **2** est une vue d'une aube du diffuseur selon un premier mode de réalisation, laquelle comporte une pluralité de fentes débouchant sur son extrados et sur son intrados, chacune des fentes communiquant avec une alvéole;
- la figure **3** est une vue du premier flanc de l'aube de la figure **2** prise selon le plan de coupe III-III ;
- la figure **4** est une vue en coupe longitudinale de l'aube de la figure **2** prise selon le plan de coupe IV-IV;
- la figure **5** est une vue d'une aube du diffuseur selon un deuxième mode de réalisation, laquelle comporte une pluralité de fentes débouchant sur son extrados et communiquant avec une cavité, ainsi qu'une pluralité de fentes débouchant sur son intrados et communiquant avec une autre cavité ;
- la figure **6** est une vue en coupe longitudinale de l'aube de la figure **5** prise selon le plan VI-VI ;
- la figure **7** est une vue en coupe transversale de l'aube de la figure **5**, prise selon le plan VII-VII et montrant l'évolution de la section transversale des cavités ;
- la figure **8** est un graphique donnant un exemple de loi de variation de la section transversale d'une cavité ; et
- la figure **9** est une vue de détail de la turbine à gaz de la figure **1** montrant l'évacuation du fluide aspiré hors d'une aube du diffuseur.

Le diffuseur selon la présente invention est notamment destiné à être utilisé avec un compresseur de type centrifuge ou mixte. Par compresseur mixte, on entend un compresseur grâce auquel le fluide comprimé sort du rouet de compresseur en faisant un angle compris entre 0 et 70° avec une direction radiale.

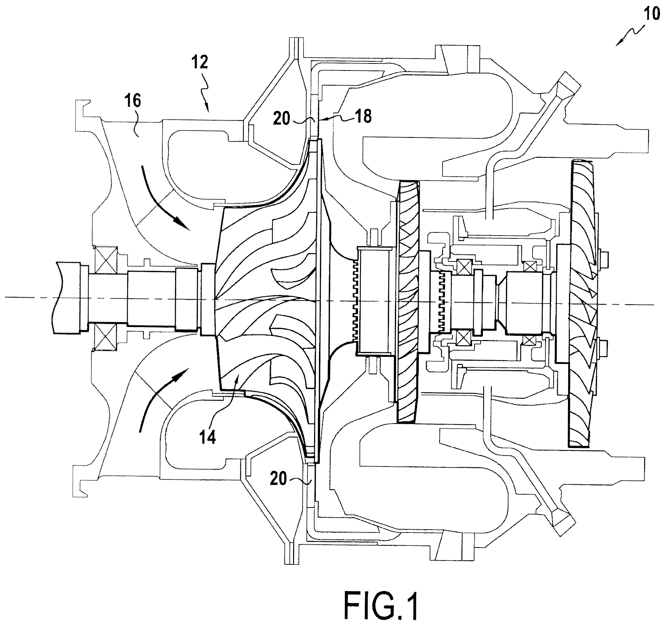

La figure **1** illustre une turbine à gaz **10** d'un hélicoptère (non représenté ici) comportant un compresseur centrifuge **12** qui comprend un rouet de compresseur **14** alimenté par une entrée d'air frais **16** ainsi qu'un diffuseur **18** objet de la présente invention, lequel est disposé en aval du rouet **14**.

De manière connue, l'air comprimé sort radialement du rouet **14** tout en présentant un moment cinétique. Le rôle du diffuseur **18** est de redresser l'écoulement **F** issu du rouet **14.**

Pour ce faire, le diffuseur **18** comporte une pluralité d'aubes **20** disposées selon la circonférence du diffuseur **18.** Chacune des aubes **20** présente, de manière connue, une direction longitudinale **L,** une direction transversale **T,** un extrados **E** et un intrados **I.**

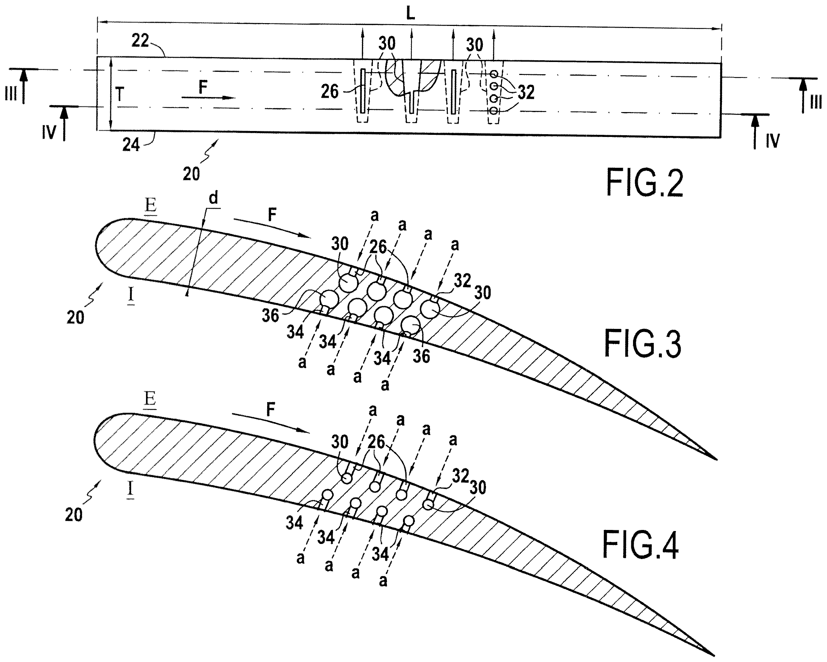

A l'aide des figures **2** à **4**, on va maintenant décrire un premier mode de réalisation du diffuseur **18** selon la présente invention.

Comme on le voit sur ces figures où est représentée l'une des aubes **20**, cette dernière présente un premier flanc **22** ainsi qu'un second flanc **24** transversalement opposé au premier flanc **22**.

Par ailleurs, cette aube **20** est pourvue d'une première série d'orifices **26** débouchant sur l'extrados **E**. Les orifices **26** de la première série sont constitués ici par des fentes s'étendant selon la direction transversale **T** de l'aube **20**, les fentes étant préférentiellement identiques.

Chacune des fentes **26** de la première série communique avec une cavité **30** formant une alvéole. Les alvéoles **30**, disposées les unes à côtés des autres, sont ménagées dans l'épaisseur de l'aube **20** de manière à s'étendre transversalement par rapport à cette dernière tout en ne débouchant que sur le premier flanc **22** de l'aube **20**.

Comme on le voit sur la figure **2**, l'extension transversale de chacune des alvéoles **30** est légèrement plus grande que la longueur de la fente **26** associée.

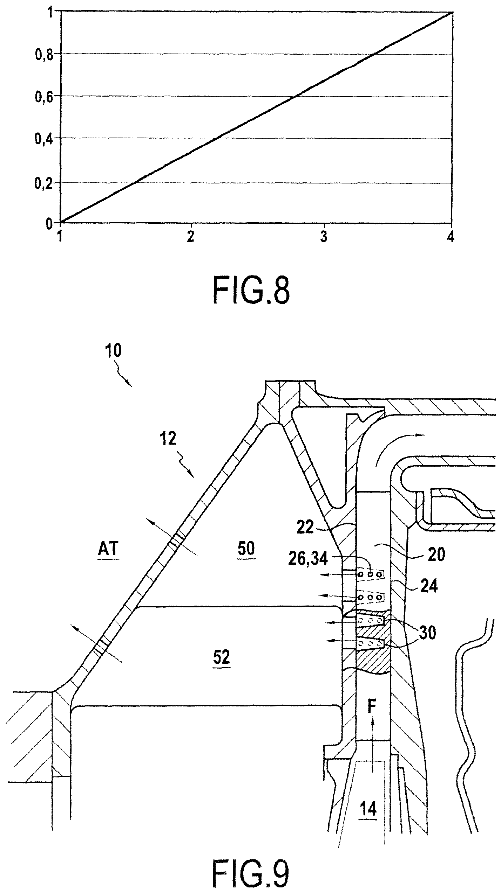

Conformément à l'invention, la section transversale des alvéoles **30** présente une loi de variation croissante vers le premier flanc, telle que celle représentée sur la figure **8****.** En l'espèce, chacune des alvéoles **30** présente une forme tronconique s'ouvrant vers le premier flanc. Il s'ensuit que la section transversale de chacune des alvéoles, en l'espèce un disque, est plus grande à l'endroit du premier flanc **22** qu'au fond de l'alvéole **30**. Autrement dit, la section transversale de l'alvéole s'accroît lorsqu'on se déplace transversalement du second flanc **24** vers le premier flanc **22**.

Cela est illustré de manière plus explicite sur les figures **3** et **4** : la figure **4** montre le premier flanc **22** de l'aube **20** sur lequel débouchent les alvéoles **30**, tandis que la figure **4** est une vue en coupe prise selon un plan s'étendant selon la direction longitudinale **L** de l'aube **20** à distance du premier flanc **22**. On constate que la section transversale **S2** de l'aube **22** en fond d'alvéole **30** est plus petite que la section transversale **S1** à l'endroit du premier flanc **22** où elle débouche.

La loi de variation est donc ici une fonction linéaire. On pourrait cependant prévoir d'autres lois de variation qui ne soient pas linéaire.

Comme variante, on peut remplacer les fentes **26** par des perçages **32** disposés côte-à-côte et s'étendant transversalement, comme on l'a illustré sur la figure **2****.** Dans ce cas, l'ensemble des perçages **32** communique avec l'alvéole **30**.

Selon un aspect avantageux de la présente invention, le diffuseur **18** comporte en outre une deuxième série d'orifices **34,** similaires aux fentes **26**, débouchant sur l'intrados **I.**

Similairement aux orifices **30** de la première série, les orifices **34** de la deuxième série communiquent avec des cavités **36**, formant également des alvéoles, qui sont distinctes des cavités **30** communiquant avec les orifices **26** de la première série.

Comme illustré notamment sur la figure **2**, les alvéoles **30** et les alvéoles **36** sont identiques et sont disposées selon deux couches.

Lors de l'écoulement du fluide, schématisé par la flèche **F**, on opère une aspiration dans les alvéoles **30** et **36,** ce qui a pour effet de créer une aspiration **a** en surface de l'extrados **E** et de l'intrados **I** par le biais des première et deuxième séries de fentes **26, 34.**

Cette aspiration **a** tend à maintenir l'écoulement de fluide **F** contre l'extrados **E** et l'intrados I de l'aube **20**, grâce à quoi, de manière avantageuse, on tend à empêcher le décollement du fluide **F**. Autrement dit, on contraint l'écoulement de fluide **F** à épouser la forme des extrados **E** et intrados **I.**

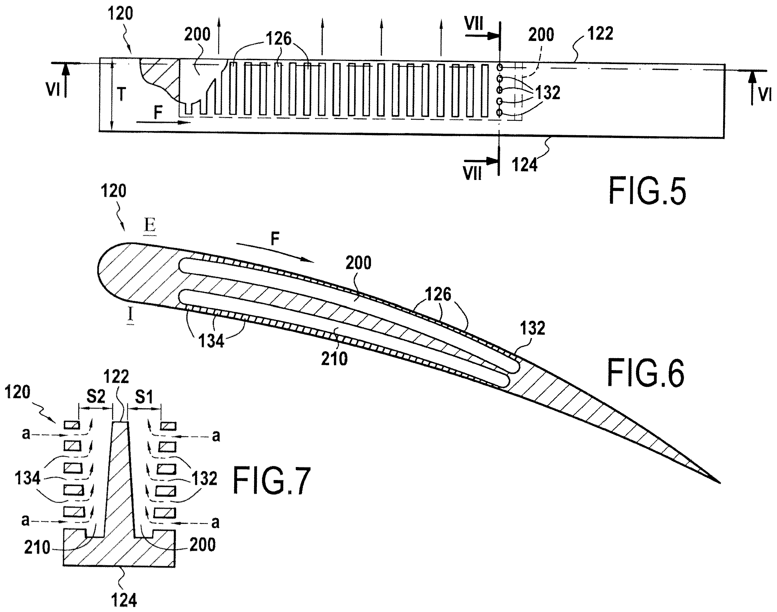

A l'aide des figures **5** et **6**, on va maintenant décrire un deuxième mode de réalisation de la présente invention.

Les éléments identiques à ceux du premier mode de réalisation porte la même référence augmentée de la valeur cent.

L'aube **120** représentée sur la figure **5** est du même type que celle du premier mode de réalisation.

Elle comprend une première série de fentes **126** débouchant sur l'extrados **E,** ainsi qu'une deuxième série de fentes **134** débouchant sur l'intrados **I.** En variante, on peut remplacer les fentes **126, 134** par des perçages **132** comme illustré sur la figure **5****.** On peut également alterner fentes et perçages selon l'effet recherché.

Le deuxième mode de réalisation se distingue du premier en ce que les fentes **126** de la première série communiquent avec une unique première cavité **200** qui est ménagée dans l'aube **120**, tandis que les fentes **134** de la deuxième série communiquent avec une unique deuxième cavité **210** ménagée dans l'aube **120.**

La première cavité **200** présente une extension transversale légèrement supérieure à la longueur des fentes **126** et une extension longitudinale au moins égale à l'extension longitudinale de la distribution de fentes **126**.

De même, la deuxième cavité **210** présente une extension transversale légèrement supérieure à la longueur des fentes **134** et une extension longitudinale au moins égale à l'extension longitudinale de la distribution de fentes **134.**

Comme on le voit sur la figure **6**, les première et deuxième cavités **200**, **210** s'étendent longitudinalement tout en étant superposée l'une à l'autre.

Elles débouchent toutes les deux sur un premier flanc **122** de l'aube **120.**

La figure **7** est une vue en coupe prise selon le plan transversal VII-VII qui montre que la section transversale **S1, S2** de chacune des cavités **200**, **210** présente une loi de variation croissante vers le premier flanc **122.** On voit en effet que les cavités **200, 210** s'ouvrent vers le premier flanc **122.**

En l'espèce, la loi de variation est une fonction linéaire.

Comme dans le premier mode de réalisation, on opère une aspiration dans les cavités **200, 210** de manière à attirer l'écoulement de fluide **F** contre la surface des extrados **E** et intrados **I** par le biais des fentes **126**, **134** de manière à éviter le décollement de l'écoulement **F.**

Un exemple de loi de variation est donné en figure **8****.** Le graphique représente la variation de la section transversale d'une cavité communiquant avec quatre orifices **32** ou **132** de section égale à 1. L'axe des abscisses représente l'axe transversal de l'aube, tandis que l'axe des ordonnées représente la section transversale normalisée.

Enfin la figure **9** montre le diffuseur **18** selon l'invention monté dans un carter de la turbine à gaz **10.** Bien que l'on ait représenté ici l'aube selon un premier mode de réalisation, la description mentionnée ci-dessous est tout à fait transposable au deuxième mode de réalisation.

Les alvéoles **30** associées aux orifices **26** de la première série sont connectées à une première chambre **50**, tandis que les alvéoles **36** associés aux orifices **34** de la deuxième série sont connectées à une seconde chambre **52** distincte de la première chambre **50**.

Le fluide aspiré depuis les fentes **26** s'écoule dans la première chambre **50** par les alvéoles **30** avant d'être évacué par exemple dans l'atmosphère, tandis que le fluide aspiré depuis les fentes **34** s'écoule dans la seconde chambre **52** par les alvéoles **36** avant d'être évacué, par exemple dans l'atmosphère **AT**. Bien entendu on s'assurera de l'étanchéité entre les première et seconde chambres **50**, **52**. On pourra prévoir d'autres modes d'évacuation en prenant soin que le fluide aspiré par les fentes **26** ne rencontre pas le fluide aspiré par les fentes **34**.

En variante, on peut également concevoir que les alvéoles associés aux orifices de la deuxième série débouchent sur le second flanc **24**, à la suite de quoi l'évacuation de l'air aspiré se fera par le premier flanc **22** pour l'air aspiré sur l'extrados **E**, et par le second flanc **24** pour l'air aspiré sur intrados **I.**

## Revendications

1. Diffuseur (18) pour un compresseur mixte ou centrifuge d'une turbine à gaz, comportant au moins une aube (20, 120) présentant un intrados (I), un extrados (E) et un premier flanc (22, 122), ladite aube étant pourvue d'une pluralité d'orifices (26, 126, 34, 134, 32, 132) débouchant sur l'extrados (E) et/ou l'intrados (I) et communiquant avec au moins une cavité ménagée dans l'aube, ladite cavité s'étendant transversalement (30, 36, 200, 210) par rapport à l'aube tout en débouchant sur le premier flanc, le diffuseur étant **caractérisé en ce que** la section transversale de la cavité (30, 36, 200, 210) varie dans la direction transversale de l'aube selon une loi de variation croissante vers le premier flanc.

2. Diffuseur selon la revendication **1**, **caractérisé en ce qu'**il comporte une première série d'orifices (26, 126) débouchant sur l'extrados (E) et communiquant avec au moins une cavité (30, 200) ménagée dans l'aube et débouchant sur le premier flanc (22, 122).

3. Diffuseur selon la revendication **2**, **caractérisé en ce qu'**il comprend une unique cavité (200) débouchant sur le premier flanc (122).

4. Diffuseur selon la revendication **2**, **caractérisé en ce qu'**il comprend une pluralité de cavités (30) formant des alvéoles débouchant sur le premier flanc (22).

5. Diffuseur selon la revendication **4**, **caractérisé en ce que** chaque alvéole (30) présente une forme tronconique.

6. Diffuseur selon l'une quelconque des revendications **1** à **5**, **caractérisé en ce qu'**il comporte en outre une deuxième série d'orifices (34, 134) débouchant sur l'intrados (I) et communiquant avec au moins une autre cavité (36, 120) ménagée dans l'aube (20, 120) et débouchant sur l'un des deux flancs de l'aube.

7. Diffuseur selon la revendication **6, caractérisé en ce que** la section transversale de cette autre cavité (36, 120) présente une loi de variation croissante vers le premier flanc de l'aube (22, 122).

8. Diffuseur selon la revendication **6** ou **7, caractérisé en ce que** les orifices (134) de la deuxième série communiquent avec une unique cavité (210) débouchant sur le premier flanc (122).

9. Diffuseur selon la revendication **6** ou **7,** caractérisé en ce les orifices (34) de la deuxième série communiquent avec une pluralité de cavités (36) formant des alvéoles débouchant sur le premier flanc (22).

10. Diffuseur selon la revendication **9**, **caractérisé en ce que** chaque alvéole (36) présente une forme tronconique.

11. Diffuseur selon l'une quelconque des revendications **1** à **10**, **caractérisé en ce que** les orifices (26, 126, 34, 134) sont des perçages (32, 132) et/ou des fentes (26, 126, 34, 134) transversales.

12. Turbomachine (10) comporte un diffuseur (18) selon l'une quelconque des revendications **1** à **11**.

## Patentansprüche

1. Diffusor (18) für einen Radial-Axial- oder Zentrifugal-Kompressor einer Gasturbine, umfassend wenigstens eine Schaufel (20, 120), die eine Vorderseite (I), eine Rückseite (E) und eine erste Flanke (22, 122) aufweist, wobei die Schaufel mit einer Vielzahl von Öffnungen (26, 126, 34, 134, 32, 132) versehen ist, die an der Rückseite (E) und/oder der Vorderseite (I) ausmünden und mit wenigstens einem in der Schaufel ausgebildeten Hohlraum in Verbindung stehen, wobei der Hohlraum in Bezug auf die Schaufel quer verläuft (30, 36, 200, 210) und dabei an der ersten Flanke ausmündet, wobei der Diffusor **dadurch gekennzeichnet ist, dass** sich der Querschnitt des Hohlraums (30, 36, 200, 210) in der Querrichtung der Schaufel entsprechend einem in Richtung der ersten Flanke zunehmenden Änderungsverlauf ändert.

2. Diffusor nach Anspruch 1, **dadurch gekennzeichnet, dass** er eine erste Reihe von Öffnungen (26, 126) umfasst, die an der Rückseite (E) ausmünden und mit wenigstens einem Hohlraum (30, 200), der in der Schaufel ausgebildet ist und an der ersten Flanke (22, 122) ausmündet, in Verbindung stehen.

3. Diffusor nach Anspruch 2, **dadurch gekennzeichnet, dass** er einen einzigen Hohlraum (200), der an der ersten Flanke (122) ausmündet, umfasst.

4. Diffusor nach Anspruch 2, **dadurch gekennzeichnet, dass** er eine Vielzahl von Hohlräumen (30), die an der ersten Flanke (22) ausmündende Zellen bilden, umfasst.

5. Diffusor nach Anspruch 4, **dadurch gekennzeichnet, dass** jede Zelle (30) eine Kegelstumpfform aufweist.

6. Diffusor nach einem der Ansprüche 1 bis 5, **dadurch gekennzeichnet, dass** er ferner eine zweite Reihe von Öffnungen (34, 134) umfasst, die an der Vorderseite (I) ausmünden und mit wenigstens einem weiteren Hohlraum (36, 120), der in der Schaufel (20, 120) ausgebildet ist und an einer der beiden Flanken der Schaufel ausmündet, in Verbindung stehen.

7. Diffusor nach Anspruch 6, **dadurch gekennzeichnet, dass** der Querschnitt dieses weiteren Hohlraums (36, 120) einen in Richtung der ersten Flanke der Schaufel (22, 122) zunehmenden Änderungsverlauf aufweist.

8. Diffusor nach Anspruch 6 oder 7, **dadurch gekennzeichnet, dass** die Öffnungen (134) der zweiten Reihe mit einem einzigen Hohlraum (210), der an der ersten Flanke (122) ausmündet, in Verbindung stehen.

9. Diffusor nach Anspruch 6 oder 7, **dadurch gekennzeichnet, dass** die Öffnungen (34) der zweiten Reihe mit einer Vielzahl von Hohlräumen (36), die an der ersten Flanke (22) ausmündende Zellen bilden, in Verbindung stehen.

10. Diffusor nach Anspruch 9, **dadurch gekennzeichnet, dass** jede Zelle (36) eine Kegelstumpfform aufweist.

11. Diffusor nach einem der Ansprüche 1 bis 10, **dadurch gekennzeichnet, dass** die Öffnungen (26, 126, 34, 134) Bohrungen (32, 132) und/oder Querschlitze (26, 126, 34, 134) sind.

12. Turbomaschine (10), die einen Diffusor (18) nach einem der Ansprüche 1 bis 11 umfasst.

## Claims

1. A diffuser (18) for a mixed or centrifugal compressor of a gas turbine, comprising at least one vane (20, 120) having a pressure side (I), a suction side (E), and a first flank (22, 122), said vane being provided with a plurality of orifices (26, 126, 34, 134, 32, 132) opening out into the suction side (E) and/or the pressure side (I) and communicating with at least one cavity formed in the vane, said cavity (30, 36, 200, 210) extending transversely relative to the vane and opening out into the first flank, the diffuser being **characterized in that** the cross section of the cavity (30, 36, 200, 210) varies in the transverse direction of the vane, said cross section increasing towards the first flank.

2. A diffuser according to claim 1, **characterized in that** it includes a first series of orifices (26, 126) opening out into the suction side (E) and communicating with at least one cavity (30, 200) provided in the vane and opening out into the first flank (22, 122).

3. A diffuser according to claim 2, **characterized in that** it includes a single cavity (200) opening out into the first flank (122).

4. A diffuser according to claim 2, **characterized in that** it includes a plurality of cavities (30) forming recesses opening out into the first flank (22).

5. A diffuser according to claim 4, **characterized in that** each recess (30) is of frustoconical shape.

6. A diffuser according to any one of claims 1 to 5, **characterized in that** it further includes a second series of orifices (34, 134) opening out into the pressure side (I) and communicating with at least one other cavity (36, 120) provided in the vane (20, 120) and opening out into one of the two flanks of the vane.

7. A diffuser according to claim 6, **characterized in that** the cross section of said different cavity (36, 120) varies, increasing towards the first edge of the vane (22, 122).

8. A diffuser according to claim 6 or claim 7, **characterized in that** the orifices (134) of the second series communicate with a single cavity (210) opening out into the first flank (122).

9. A diffuser according to claim 6 or claim 7, **characterized in that** the orifices (34) of the second series communicate with a plurality of cavities (36) forming recesses opening out into the first flank (22).

10. A diffuser according to claim 9, **characterized in that** each recess (36) is of frustoconical shape.

11. A diffuser according to any one of claims 1 to 10, **characterized in that** the orifices (26, 126, 34, 134) are drilled holes (32, 132) and/or slots (26, 126, 34, 134).

12. A turboengine (10) including a diffuser (18) according to any one of claims 1 to 11.
